# EUROPÄISCHE PATENTSCHRIFT

(11) **EP 0 925 126 B1**
(45) Veröffentlichungstag und Bekanntmachung des Hinweises auf die Patenterteilung: **12.04.2000**
(21) Anmeldenummer: 97938856.8
(22) Anmeldetag: 24.07.1997
(51) Int. Cl.: B21D 5/04, B21D 28/02, B23D 33/08

(54) **BEARBEITUNGSMASCHINE FÜR PLATTENFÖRMIGE WERKSTÜCKE MIT EINEM IN EINZELNE SEGMENTE UNTERTEILTEN NIEDERHALTER**
MACHINING CENTRE FOR PROCESSING FLAT WORKPIECES, PROVIDED WITH A SEGMENT DISTRIBUTED HOLD-DOWN
MACHINE A USINER DES PLATS DOTEE D'UNE SERRE-FLAN REPARTI EN SEGMENTS

(30) Priorität: 07.09.1996 DE 19636463
(43) Veröffentlichungstag der Anmeldung: 30.06.1999
(73) Patentinhaber: EHT Werkzeugmaschinen GmbH, 79331 Teningen (DE)
(72) Erfinder: KALTENBACH, Hermann, D-79194 Gundelfingen (DE)
(74) Vertreter: Schmitt, Hans, Dipl.-Ing.
(86) Internationale Anmeldenummer: EP9704006
(87) Internationale Veröffentlichungsnummer: WO9809743

(56) Entgegenhaltungen:
- EP-A- 0 105 091
- EP-A- 0 257 015
- EP-A- 0 258 204
- EP-A- 0 274 159
- EP-A- 0 310 145
- EP-A- 0 682 996
- EP-A- 0 694 346
- US-A- 4 722 214
- PATENT ABSTRACTS OF JAPAN vol. 010, no. 286 (M-521), 27.September 1986 & JP 61 103626 A (MARU KIKAI KOGYO KK), 22.Mai 1986,

## Beschreibung

Die Erfindung betrifft eine Bearbeitungsmaschine für plattenförmige Werkstücke, insbesondere zur Erzeugung von gebogenen Rändern an Blechteilen und/oder zum Beschneiden oder Stanzen von aus Blech gebildeten Werkstücken, gemäß dem Oberbegriff des Anspruchs 1 (siehe JP-A- 61 103 626).

Eine weitere Bearbeitungsmaschine ist aus EP-0 258 204 B1 bekannt. Die Verschiebung einzelner Segmente des Niederhalters dient dabei dazu, bei der Blechbearbeitung entstandene Hinterschneidungen zu berücksichtigen und trotz solcher Hinterschneidungen den Niederhalter aus dem Werkstück entfernen zu können. Dabei sind bei der bekannten Bearbeitungsmaschine die verschiebbaren Segmente mittels einer Verstellstange einzeln verstellbar, wobei jedes Segment eine eigene Klemmkupplung zum Verbinden mit dieser Verstellstange aufweist. In gekuppelter Position werden die Segmente mit der Verstellstange mitgenommen und verschieben außerdem die in Verstellrichtung gesehen vor einem gekuppelten Segment anliegenden weiteren Segmente.

Es ist also ein hoher Aufwand erforderlich, um wahlweise einzelne Segmente oder Gruppen von Segmenten verstellen zu können, weil jedes Segment eine eigene Klemmkupplung mit einer zugehörigen Ansteuerung benötigt. Um die Segmente wahlweise mit der Verstellstange oder einem Träger verbinden zu können, haben sie quer zur Stellstange verlaufende Ausnehmungen, in denen jeweils ein Klemmstück verschiebbar ist. Jedes Klemmstück muß im Klemmsitz durch zwei Klemmfedern belastet werden, deren Kraft durch Stellzylinder aufgehoben werden muß. Diese Stellzylinder benötigen entsprechende Bohrungen für ein Druckmittel. Zur Steuerung ist jeweils ein Schaltventil erforderlich, welches seinerseits jeweils einen entsprechenden Anschluß zu einer Steuerung benötigt. Die einzelnen Segmente müssen also auch eine gewisse Mindestabmessung haben, um die aus Klemmstücken und Betätigungsteilen bestehende Kupplung jeweils aufnehmen zu können.

Es besteht deshalb die Aufgabe, eine Bearbeitungsmaschine der eingangs genannten Art zu schaffen, bei welcher der Kupplungsaufwand der verschiebbaren Segmente vermindert und vereinfacht ist.

Diese Aufgabe wird durch eine Bearbeitungsmaschine mit den Merkmalen des Anspruchs 1 gelöst.

Somit ist es nicht erforderlich, an jedem Segment eine Klemmkupplung vorzusehen, sondern es genügt ein einziges Kupplungsstück, das mit einer entsprechend einfach gestalteten Gegenkupplung der einzelnen Segmente in Eingriff gebracht werden kann, um ausgewählte Segmente stufenlos verstellen zu können. Es braucht lediglich das einzige Kupplungsstück zu einem jeweiligen Segment verstellt oder verfahren zu werden, um es mit diesem zu verbinden, wonach eine weitere Verstellung des Kupplungsstückes die entsprechende Verstellung des Segmentes und der in Verstellrichtung davor anliegenden weiteren Segmente ermöglicht. Somit benötigt keines der Segmente selbst eine vollständige Klemmkupplung, die an einer Verstellstange wahlweise angeklemmt oder von ihr gelöst wird, sondern es genügt eine Gegenkupplung, die sehr einfach gestaltet und beispielsweise als Aussparung oder Vorsprung zum Zusammenwirken mit einem dazu passenden Vorsprung oder einer Aussparung an dem Kupplungsstück ausgebildet sein kann.

Darüber hinaus ergibt sich der erhebliche Vorteil, daß schon während eines Biegevorganges das Kupplungsstück in eine neue Position gebracht werden kann, um unmittelbar nach einem solchen Biegevorgang eine neue oder weitere Verstellung durchführen zu können. Die Zeit des eigentlichen Bearbeitungsvorganges kann also benutzt werden, um das Kupplungsstück in eine neue Position zu bringen.

Die Anordnung in einer Innenhöhlung des Trägers schützt das Kupplungsstück und den Verstellantrieb vor Verschmutzungen und vermeidet einen zusätzlichen Platzbedarf. Außerdem kann auf diese Weise das Kupplungsstück so plaziert werden, daß es beispielsweise oberhalb der Segmente bei eingefahrenem Kupplungsmitnehmer verschoben werden kann, nach seiner Verdrehung aber der Kupplungsmitnehmer von oben in die entsprechende Gegenkupplung eines Segmentes eingreifen kann. Es ergibt sich also eine platzsparende, kompakte und dennoch wirkungsvolle Konstruktion bei der gleichzeitig eine Verschmutzungsgefahr für die Kupplungsteile weitgehend ausgeschlossen ist.

Besonders einfach wird der Kupplungsvorgang, wenn der Verstellantrieb ein Linearantrieb ist und wenn das Kupplungsstück an dem Verstellantrieb um eine parallel zu dem Verstellantrieb oder in Orientierungsrichtung des Verstellantriebes gerichtete Achse drehbar und dadurch der - bevorzugt als Vorsprung ausgebildete - Kupplungsmitnehmer um diese Achse in Kupplungsposition oder aus der Kupplungsposition verschwenkbar ist. Dabei ist es günstig, wenn der als Linearantrieb ausgebildete Verstellantrieb zumindest an einer Seite über die Reihe der Segmente übersteht und in diesem überstehenden Bereich einen Antriebsmotor hat. Dadurch wird in Fortsetzung der Segmentreihe nur wenig Platz für den eigentlichen Verschiebeantrieb benötigt. Vor allem kann auf einfache Weise das Kupplungsstück in die jeweilige, einem zu verstellenden Segment entsprechende Lage verschoben und dort dann in Kupplungsposition geschwenkt werden, um in Folge durch eine weitere Verstellbewegung dieses Segment und in Verstellrichtung davor befindliche weitere Segmente verschieben zu können.

Besonders vorteilhaft ist es, wenn als Linearantrieb ein Spindeltrieb mit drehbarer Spindel und dadurch axial auf der Spindel verstellbarer Mutter vorgesehen ist und wenn das Kupplungsstück auf oder an der Mutter dieses Spindeltriebes drehbar gelagert und durch Drehung der ortsfesten Spindel mittels der Mutter in Axialrichtung der Spindel verstellbar ist. Durch Drehung der Spindel kann also die zu dem Spindeltrieb gehörende Mutter in axialer Richtung parallel zu der Reihe der Segmente verstellt werden, so daß das von dieser Mutter getragene Kupplungsstück ebenfalls entsprechend verstellt wird. In Kupplungsposition kann dadurch außerdem die Verschiebung einzelner Segmente erfolgen. Somit wird in axialer Richtung für den Verstellantrieb nur wenig Platz benötigt, weil es genügt, an der Spindel einen Antriebsmotor anzukuppeln. Eine platzaufwendige Schub- und Zugstange für die Verstellung der Segmente wird vermieden.

Parallel zu dem Linearantrieb oder der Spindel kann ein Verstellelement zum Verdrehen des Kupplungsstückes in Kupplungseingriff und außer Kupplungseingriff verlaufen. Somit kann die Kupplung durch Verdrehen der Spindel zunächst in Kupplungsposition gebracht und dann mit Hilfe des parallelen Verstellelementes eingekuppelt und nach einer Verschiebebewegung der Segmente wieder ausgekuppelt werden.

Zweckmäßig ist es dabei, wenn parallel zu der die Mutter mit dem relativ zu ihr drehbaren Kupplungsstück tragenden und in Richtung der Reihe der Segmente verstellenden Spindel eine gezahnte Welle verläuft, deren in Axialrichtung verlaufende Zähne mit einer an dem Kupplungsstück angeordneten Gegenzahnung oder einem Zahnradsegment kämmt. Eine solche gezahnte Welle läßt sich platzsparend parallel zu der Spindel anordnen, verhindert aber nicht die axiale Verstellung des Kupplungsstückes, weil dessen Zähne in axialer Richtung entlang den Zähnen der gezahnten Welle verschoben werden können. In jeder Position kann aber durch Drehen der gezahnten Welle dann auch das Kupplungsstück verdreht werden.

Die gezahnte Welle kann oberhalb der Spindel innerhalb des Trägers für die Segmente in einer Innenlängshöhlung angeordnet und gelagert sein. Somit ist auch diese Welle geschützt und platzsparend untergebracht und befindet sich an einer Stelle, an welcher der eigentliche Kupplungsvorgang, das heißt das Ein- und Ausschwenken des Kupplungsmitnehmers in die Gegenkupplung nicht behindert wird.

Die vorbeschriebenen Merkmale und Maßnahmen hinsichtlich Anordnung des Kupplungsstückes und seines Verstellantriebes in Gebrauchsstellung oberhalb der Segmente haben den erheblichen Vorteil, daß die Segmente einzeln lösbar an dem Träger gehalten sind. Somit ist es möglich, einzelne Segmente aus der Reihe zu lösen und dadurch die Gesamtabmessung des Niederhalters zu verändern. Entsprechend gut kann er an ein jeweiliges Werkstück angepaßt werden.

Damit die Segmente einerseits verschiebbar und von der Kupplung erreichbar, andererseits aber dennoch einfach auswechselbar sind, ist es günstig, wenn der Träger zwei gegeneinander versetzte, nach derselben Seite hin offene Nuten oder Hinterschneidungen hat, die in horizontaler Richtung beabstandet sind und in die an dem jeweiligen Segment angeordnete Vorsprünge passen, zwischen welchen die die Gegenkupplung aufweisende Stirnseite verläuft. In ausgekuppelter Position kann so ein entriegeltes Segment in der Richtung verschoben und dadurch aus dem Verbund gelöst werden, in welcher die Nuten offen sind, zweckmäßigerweise etwa in horizontaler Richtung und dabei quer zur Verschieberichtung nach der Seite hin, nach welcher die Nuten offen sind. Somit können die einzelnen Segmente mit den Nuten in Gebrauchsstellung verhakt sein und in Orientierungsrichtung dieser Nuten problemlos verschoben werden, nach einem noch zu beschreibenden Öffnen der Nuten oder einer Halterung aber aus diesen Nuten quer zur Verschieberichtung ausgehängt werden.

Zum lösbaren Festlegen der Segmente in ihrer jeweiligen Gebrauchsstellung, zu der auch eine Verschiebbarkeit gehört, ist es günstig, wenn der Träger wenigstens eine oder mehrere einander fortsetzende Klemmleisten trägt, die einen die Segmente in ihrem Haltebereich übergreifenden Haltesteg hat oder haben, womit die Segmente in ihrer Eingriffsstellung an dem Träger festlegbar sind. Während einer Verschiebung der Segmente braucht die Klemmleiste nur geringfügig gelockert zu werden, zum Austauschen oder Entfernen von Segmenten hingegen kann sie entsprechend geöffnet werden.

Dabei ist vorteilhaft, wenn die Klemmleiste mittels über ihre Länge nebeneinander angeordnete, insbesondere an dem Träger eingelassene Arbeitszylinder in Offen- und Schließstellung verstellbar ist. Da diese Arbeitszylinder zum Lockern oder Öffnen oder Schließen der Klemmleiste alle gleichzeitig zu betätigen sind, ergibt sich eine sehr einfache Ansteuerung.

Der Haltesteg der Klemmleiste kann kammartig in Einzelstege unterteilt sein und der Abstand der Einzelstege kann geringer als die in Verschieberichtung orientierte Breite der Segmente, auch des schmalsten Segmentes, sein. Dadurch wird sichergestellt, daß auch bei kleinen Maßtoleranzen jedes Segment sicher in seiner Halteposition geklemmt werden kann. Bei einer Klemmleiste mit einem durchgehenden Haltesteg läßt sich nicht mit Sicherheit ausschließen, daß aufgrund der Abstützung auf Nachbarbereichen das eine oder andere Segment etwas locker bleiben könnte. Die Einzelstege können jedoch aufgrund der Klemmkraft und einer gewissen Eigenelastizität geringe Maßunterschiede im Verlauf der Reihe der Segmente ausgleichen.

Der Haltesteg oder seine Einzelstege können eine Anlage an dem Träger und eine Anlage an dem Segment haben. Dadurch wird ein sicherer Anschlag und eine gute Halterung der Segmente erreicht, auch wenn innerhalb der Reihe ein oder mehrere Segmente gelöst und entfernt sind. Die an einem jeweiligen Segment ganz oder teilweise angreifenden Einzelstege finden dann auch einen ausreichenden Halt, selbst wenn ein Segment - vorübergehend - fehlt.

Zusätzlich zu der Klemmleiste oder gegebenenfalls anstelle der Klemmleiste kann an jedem Segment ein Riegel zum Fixieren seiner Halteposition an dem Träger vorgesehen sein, welcher Riegel benachbart zu dem von der Klemmleiste abliegenden Vorsprung angeordnet sein kann, welcher in die an dem Träger tieferliegende Hinterschneidung eingreift. Der insbesondere vertikal an dem Segment verschiebbare und in Riegelposition den Träger etwas übergreifende Riegel kann also verhindern, daß das Segment aus der Hinterschneidung ausgehängt werden kann. Dies ist vor allem dann vorteilhaft, wenn das eine oder andere Segment entfernt werden soll. Dazu muß die Klemmleiste geöffnet werden, so daß es zweckmäßig ist, wenn alle nicht zu entfernenden Segmente mit ihren Riegeln fixiert werden, damit nicht versehentlich ein Segment aus seiner Halterung herausrutschen kann. Für diesen Riegel kann an dem Träger eine in Längsrichtung durchgehende Ausnehmung vorgesehen sein, in die der Riegel in Schließstellung eingreift, so daß er nicht über die Vorder- oder Außenseite des Trägers überstehen muß.

Jedes Segment kann an seiner in Gebrauchsstellung oberen Stirnseite zwischen den mit den Hinterschneidungen des Trägers zusammenwirkenden Vorsprüngen mindestens eine Aussparung als Gegenkupplung für den Kupplungsvorsprung oder Kupplungsmitnehmer des Kupplungsstückes haben, dessen Breite in Verschieberichtung etwa der dieses Kupplungsvorsprunges entspricht. Somit ergibt sich eine sehr einfache Gegenkupplung, die durch eine Aussparung bereits realisiert ist. Diese kann an der Stirnseite problemlos angebracht, zum Beispiel ausgefräst werden, so daß es keiner aufwendigen Befestigungen von Kupplungsteilen an den einzelnen Segmenten bedarf. Besonders günstig ist es dabei, wenn die als Gegenkupplung dienende Aussparung an einem Segment nach einer Seite in einer Verschieberichtung offen ist und durch das Nachbarsegment begrenzt wird. Eine einseitig in dieser Form offene Aussparung kann noch einfacher angebracht werden. Darüber hinaus kann dann die Aussparung beim Trennen der zu verschiebenden Segmente von den nicht zu verschiebenden Segmenten mitbenutzt werden.

Vorteilhaft ist es dabei, wenn der Kupplungsmitnehmer eine größere Breite als die einseitig offene Aussparung hat und an ihm oder der Aussparung eine Einlaufschräge vorgesehen ist. Schon beim Einkuppeln wird dadurch erreicht, daß das Segment mit der Aussparung von seinem Nachbarsegment etwas getrennt wird, so daß nicht eventuell beim Verschieben ein durch Öl oder dergleichen klebendes Segment ungewollt mitverschoben werden kann.

An breiten Segmenten können beidseitig begrenzte Aussparungen als Gegenkupplung vorgesehen sein. Falls diese beidseitig begrenzten Aussparungen zusätzlich zu einer randseitig offenen, also nur einseitig begrenzten Aussparung vorhanden sind, hat der Eenutzer die Wahl, ob er ein einzelnes Segment an einer beidseits begrenzten Aussparung ankuppelt oder aber vor allem beim Verschieben mehrerer Segmente gemeinsam zum Trennen von nicht zu verschiebenden Segmenten in die randseitig offene Aussparung mit dem Kupplungsvorsprung oder Kupplungsmitnehmer eingreift. Breite Segmente können gegebenenfalls auch an ihren beiden Rändern jeweils eine randseitig offene Aussparung haben, um sie wahlweise von rechts oder links von ihnen befindlichen weiteren Segmenten trennen zu können.

Für größere Bearbeitungsmaschinen zur Bearbeitung großer Werkstücke oder eventuell auch gleichzeitig mehrerer Werkstück ist zweckmäßig und vorteilhaft, wenn beidseits von einem mittleren, in Querrichtung oder vertikaler Richtung verstellbaren Schieber jeweils eine Reihe von Segmenten mit jeweils einem relativ zu diesen verstellbaren Kupplungsstück vorgesehen ist. Solche Bearbeitungsmaschinen mit einem aushebbaren Mittelschieber sind an sich bekannt und erlauben vielfältige Bearbeitungen über eine große Abmessung von Werkstücken, wobei beim Herausnehmen des Mittelschiebers zusätzliche Verschiebemöglichkeiten für die verbleibenden Segmente entstehen können. In einem solchen Falle kann die erfindungsgemäße Anordnung eines Kupplungsstückes an einem Verstellantrieb in gleicher Weise angewendet werden, wobei dann für die beidseits des Mittelschiebers befindlichen Gruppen von Segmenten jeweils ein solches Kupplungsstück mit zugehörigem Antrieb vorzusehen ist, so daß die beidseits des Mittelschiebers angeordneten Segmente jeweils einzeln oder gruppenweise verschoben werden können.

Es wurde im Zusammenhang mit den als Aussparungen gestalteten Gegenkupplungen schon angedeutet, daß Segmente unterschiedlicher Abmessungen oder unterschiedlicher Breiten auswechselbar kombiniert sein können. Dadurch wird die Anpassung der Bearbeitungsmaschine und insbesondere ihres Niederhalters an unterschiedlich bemessene Werkstück weiter verbessert.

Eine weitere Ausgestaltung der erfindungsgemäßen Bearbeitungsmaschine kann darin bestehen, daß der die Segmente lösbar tragende Träger - der bei einer Bearbeitungsmaschine mit Mittelschieber jeweils an diesem Mittelschieber endet - seinerseits in seiner Längserstreckungsrichtung und parallel zur Biegelinie verschiebbar gelagert und festlegbar, zum Beispiel festklemmbar ist. Dadurch kann auf einfache Weise eine Verstellung des gesamten Paketes von Segmenten durchgeführt werden, ohne daß das Kupplungsstück in Einsatz kommen muß. Darüber hinaus kann eine Verstellung einzelner Segmente und eine Verstellung der dadurch erzeugten Anordnung der Segmente insgesamt durchgeführt werden, das heißt, beide Verstellungen und Verstellbewegungen können kombiniert bzw. einander überlagert werden. Vor allem eine Verschiebebewegung des jeweiligen Trägers weg von dem Mittelschieber ist problemlos durchführbar und wenn der Mittelschieber entfernt ist, kann der Träger auch in entgegengesetzter Richtung verschoben werden, um beispielsweise die an zwei durch einen Mittelschieber getrennten Pakete von Segmenten unmittelbar aneinanderzulegen beispielsweise kann der Träger an einer Schwalbenschwanzführung gelagert und festlegbar sein.

Der Antriebsmotor für die Spindel zum Verstellen des Kupplungsstückes kann ein Elektromotor sein, der mit einem Drehgeber gekuppelt ist. Dies erlaubt eine sehr einfache Messung der jeweiligen Lage des Kupplungsstückes und eine Wiederholung bestimmter Einstellbewegungen, das heißt die Verstellung des Kupplungsstückes kann vorprogrammiert und über den Drehgeber durchgeführt werden.

Der Schwenkantrieb für die Zahnwelle zum Verschwenken des Kupplungsvorsprunges kann in oder außer Eingriff gegenüber dem Antriebsmotor für die Spindel derart gesperrt sein, daß er nur bei stehendem Spindelantrieb betätigbar ist. Dadurch kann verhindert werden, daß das Kupplungsstück während seiner axialen Verstellung in Kupplungseingriff verdreht werden könnte, wenn der Kupplungsmitnehmer gar nicht in Übereinstimmung mit einer Aussparung ist oder umgekehrt ein Auskuppelvorgang während einer Verstellung des Kupplungsstückes mit damit gekuppelten Segmenten erfolgen kann.

Vor allem bei Kombination einzelner oder mehrerer der vorbeschriebenen Merkmale und Maßnahmen ergibt sich eine Bearbeitungsmaschine insbesondere zum Abkanten oder Biegen von Blechen und Blechteilen, die hinsichtlich des Niederhalterwerkzeuges an unterschiedlichste Abmessungen durch Verschieben der einzelnen, den Niederhalter bildenden Segmente angepaßt werden kann, wobei die Verschiebung der einzelnen Segmente zur Bildung unterschiedlich bemessener Gruppen von Segmenten sehr einfach mit einem einzigen Kupplungsstück durchgeführt werden kann, ohne daß an den einzelnen Segmenten aufwendige Klemmvorrichtungen oder dergleichen benötigt werden. Vielmehr genügen dort zu dem Kupplungsstück passende Gegenkupplungen zum Beispiel in Form von Aussparungen. Auch die Verstellantriebe und Antriebsteile können sehr einfach und robust gestaltet sein, beispielsweise in Form eines Spindeltriebes und einer gezahnten Welle. Dabei können diese Antriebe und das Kupplungsstück gut geschützt innerhalb des Trägers für die Segmente untergebracht werden, so daß sie keinen zusätzlichen Platz benötigen.

Nachstehend ist ein Ausführungsbeispiel der Erfindung anhand der Zeichnung näher beschrieben. Es zeigt in zum Teil schematisierter Darstellung:
- Fig. 1: eine teilweise im Schnitt gehaltene Ansicht eines Balkens für in Segmente unterteilte Niederhalter einer Bearbeitungsmaschine für plattenförmige Werkstücke, wobei antrieb und die den Balken aufnehmenden Führungen sowie das Maschinengestell der besseren Übersicht wegen weggelassen sind und in der Mitte des Balkens ein Mittelschieber gelagert ist, der zwei Gruppen von Segmenten voneinander trennt, deren jede einen Antrieb zum Verschieben der Segmente aufweist,
- Fig. 2: in schematisierter Darstellung eine Verschiebestellung von Segmenten derart, daß jeweils der von ihnen gebildete Niederhalter eine Lücke hat,
- Fig.3: eine der Fig.2 entsprechende Darstellung, bei welcher alle Segmente zusammengeschoben sind, wobei gleichzeitig wie in Fig.2 angedeutet ist, daß der Mittelschieber dabei angehoben sein kann,
in vergrößertem Maßstab
- Fig. 4: einen Querschnitt eines mit dem Balken verbundenen Trägers, in dessen Längsrichtung die Segmente einzeln oder gemeinsam verschiebbar sind, wobei der Träger in seinem Inneren ein verstellbares Kupplungsstück enthält, das in beliebige Positionen verfahrbar und mit einem jeweils ausgewählten Segment kuppelbar ist, wobei Fig.4 gleichzeitig die Seitenansicht eines an diesem Träger mittels einer Klemmleiste und eines Riegels festgelegten Segmentes zeigt und das Kupplungsstück ausgekuppelt ist,
- Fig.5: eine der Fig.4 entsprechende Darstellung, bei welcher die Klemmleiste mittels eines Kolbenantriebes gelöst und der auf der gegenüberliegenden Seite befindliche Riegel mittels eines Greifers geöffnet und das Segment aus seiner Gebrauchsstellung verschoben ist oder sich kurz vor dem Einfügen in seine Gebrauchsstellung und Lagerung an dem Träger befindet,
- Fig. 6: eine den Figuren 4 und 5 entsprechende Darstellung, wobei das Segment aus seiner Halterung von dem Träger gelöst ist oder sich vor seinem Einsetzen in die Lagerung an dem Träger befindet,
- Fig.7: in weiter vergrößerter Darstellung den Träger für die Segmente, die Lagerstelle des Segmentes an dem Träger und den Angriff eines Haltesteges der Klemmleiste einerseits an dem Träger und andererseits an einem Segment,
- Fig.8: eine Ansicht der Klemmleiste und ihres kammartig in Einzelstege unterteilten Haltesteges,
- Fig.9: in weiter vergrößerter Darstellung das durch einen Kreis in Fig.7 markierte Detail A mit den beiden Anlagen der Einzelstege der Klemmleiste einerseits an dem Träger und andererseits an einem Segment,
- Fig.10: im Querschnitt die geöffnete Kupplung zwischen Kupplungsstück und Segment mit einem Querschnitt einer gezahnten Welle zur Verschwenkung des Kupplungsstückes,
- Fig.11: eine der Fig.10 entsprechende Darstellung nach dem Verschwenken des Kupplungsstückes, so daß dessen Kupplungsmitnehmer in eine als Aussparung ausgebildete Gegenkupplung des Segmentes eingreift,
- Fig.12: einen Schnitt gemäß der Linie A-A in Fig.10 durch den Kupplungsbereich und dabei durch den Kupplungsmitnehmer mit Draufsicht eines Segmentes, wobei der Kupplungsmitnehmer außer Eingriff ist,
- Fig.13: einen Schnitt durch den Kupplungsbereich gemäß der Linie B-B in Fig.11 und dabei durch den im Kupplungseingriff befindlichen Kupplungsmitnehmer,
- Fig.14: eine Ansicht des Kupplungsstückes und der dieses relativ zu ihr drehbare Kupplungsstück tragenden Mutter eines Spindelantriebes und der zum Verdrehen des Kupplungsstückes dienenden gezahnten Welle im Bereich ihrer antriebsfernen Lagerung sowie
- Fig.15: den Antrieb der Spindel für die axiale Verstellung des Kupplungsstückes entlang der Reihe der einzelnen Segmente mit einem Drehgeber sowie den Antrieb für die gezahnte Welle.

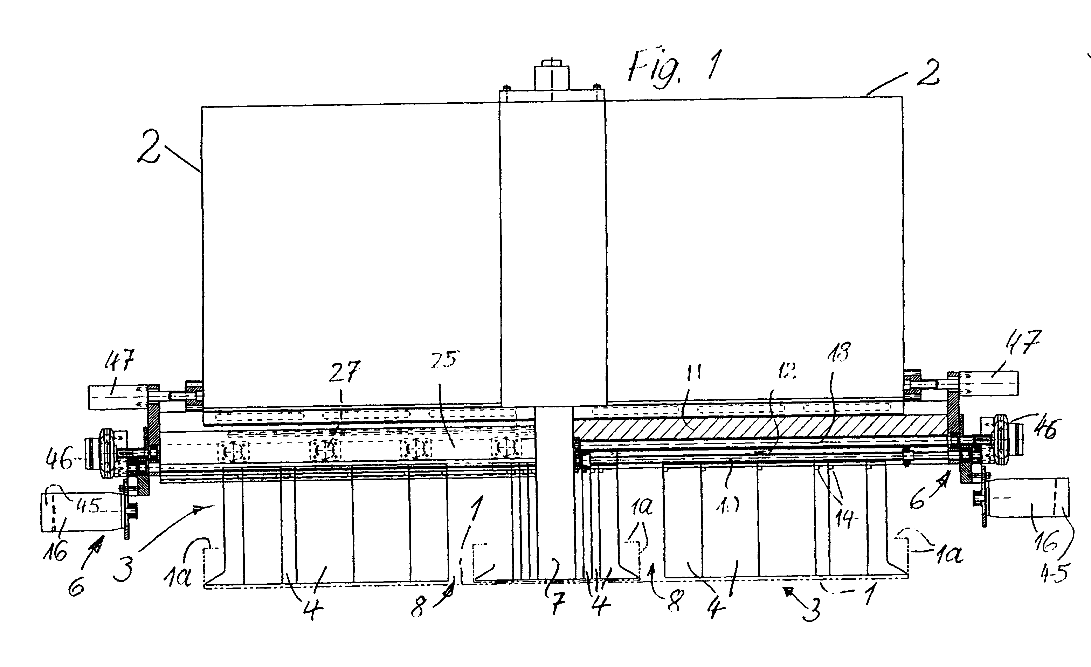

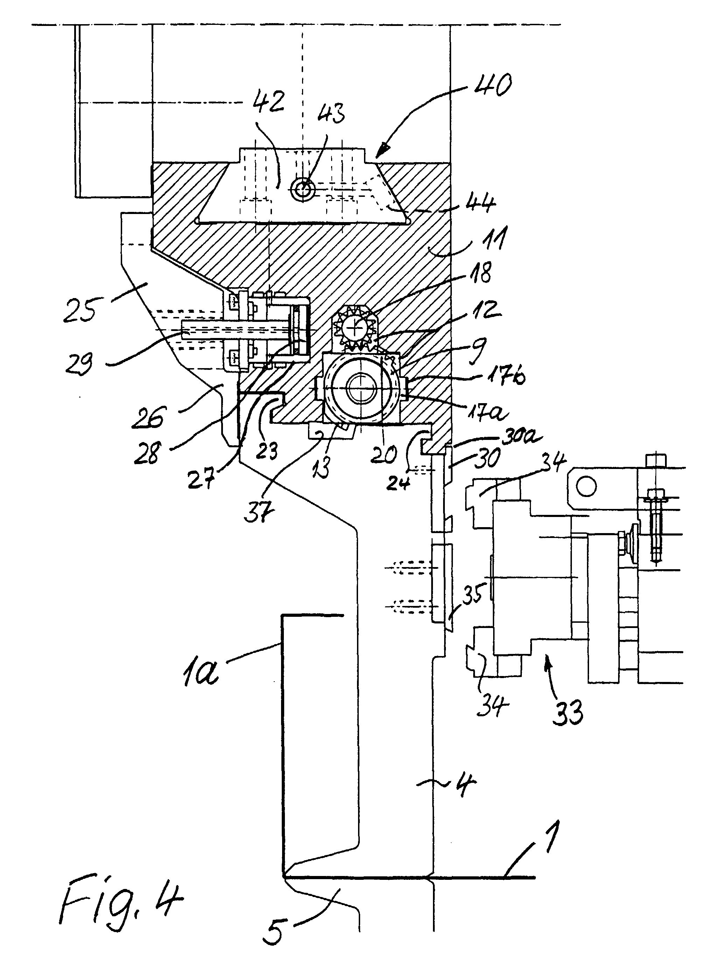

Von einer Bearbeitungsmaschine für in Fig.1 strichpunktiert und in Fig.4 teilweise angedeutete Werkstücke 1, die aus Blech bestehen und mit gebogenen Rändern la versehen werden sollen, ist in Fig.1 - ohne seinen Antrieb und ohne die ihn aufnehmenden Führungen - ein Balken 2 dargestellt, an dessen unterem Längsrand ein im ganzen mit 3 bezeichneter Niederhalter angeordnet ist, der in einzelne Segmente 4 unterteilt ist. Damit kann das Werkstück 1 auf einer in Fig.4 angedeuteten Werkstückauflage 5 festgespannt werden, die sich zweckmäßigerweise über mindestens die gesamte Länge des Niederhalters 3 erstreckt. Das zum Biegen der Ränder la dienende Biegewerkzeug ist dabei der Einfachheithalber ebenfalls in den Zeichnungen nicht dargestellt.

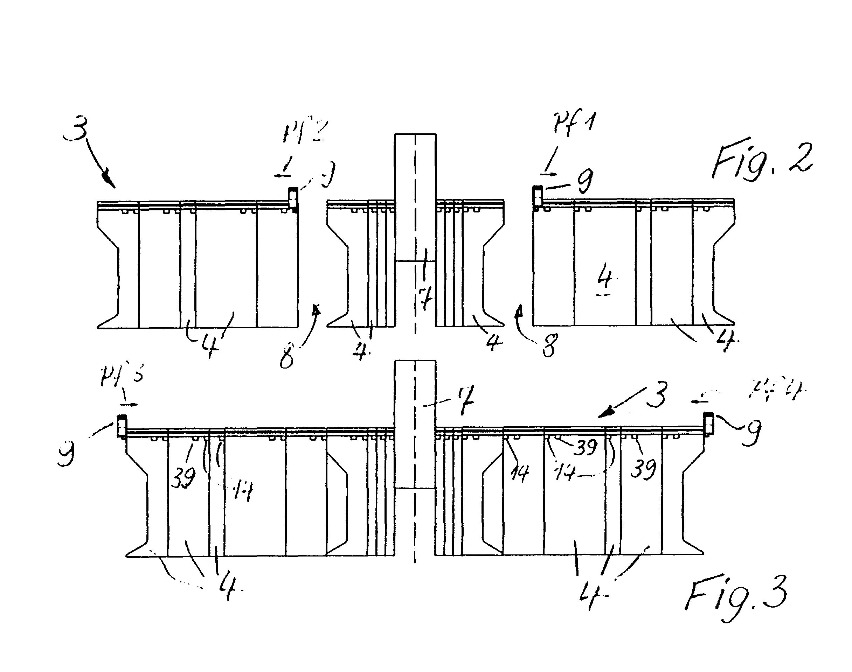

Die Segmente 4 sind gemäß Fig.1 bis 3 und 14 in einer Reihe nebeneinander in Richtung der Orientierung der Werkstückauflage 5 und des Balkens 2 und damit einer Bearbeitungslinie, im Falle einer Biegemaschine also in Richtung der Biegelinie, angeordnet und in dieser Richtung gemäß den Pfeilen Pf1, Pf2, Pf3 und Pf4 in den Figuren 2 und 3 hin- und herverschiebbar und festlegbar gelagert, wobei sie mit einem im wesentlichen über die Länge des jeweiligen Niederhalters 3 reichenden, im ganzen mit 6 bezeichneten Verstellantrieb in noch zu beschreibender Weise wahlweise lösbar kuppelbar sind.

Im Ausführungsbeispiel gemäß Fig.1 sind zwei aus Segmenten 4 zusammengesetzte Niederhalter 3 jeweils mit einem Verstellantrieb 6 versehen und befinden sich beidseits eines zwischen ihnen angeordneten und in der Höhe verstellbaren Mittelschiebers 7. Zu diesem Mittelschieber 7 sind die beiden Niederhalter 3 und ihre Verstellantriebe 6 praktisch spiegelsymmetrisch angeordnet, so daß sich in an sich bekannter Weise entsprechend viele Bearbeitungsmöglichkeiten ergeben, indem zum Beispiel unterschiedlich große Werkstücke 1 je nach Anordnung von Lücken 8 zwischen Segmenten 4 bearbeitet werden können.

Damit einzelne Segmente 4 oder Gruppen von solchen Segmenten 4, wie bereits erwähnt, verschoben werden können, ist an dem jeweiligen Verstellantrieb 6 ein im Ausführungsbeispiel einziges Kupplungsstück 9 in Richtung der von den Segmenten 4 gebildeten Reihen und in Erstreckungsrichtung des Balkens 2 stufenlos verstellbar oder verfahrbar. Der Verstellantrieb 6 bewirkt dabei diese Verschiebung des Kupplungsstückes 9 in noch zu beschreibender Weise. Dieses Kupplungsstück 9 kann in jeder beliebigen Position eines Segmentes 4 mit diesem gekuppelt werden, wobei jedes Segment 4 eine noch zu beschreibende Gegenkupplung zum lösbaren Verbinden mit diesem verstellbaren Kupplungsstück 9 hat. Es ist also möglich, das Kupplungsstück 9 der beiden Verstellantriebe 6 jeweils mit einem beliebigen Segment 4 des jeweiligen Niederhalters 3 zu kuppeln, um dieses entsprechende Segment 4 dann in Längsrichtung verschieben zu können, wobei in Verschieberichtung vor dem Segment befindliche weitere Segmente mitverschoben werden (Fig. 2 und 3).

Der das Kupplungsstück 9 in noch zu beschreibender Weise tragende Teil des Verstellantriebes 6, nämlich eine drehbar antreibbare Spindel 10 ist gemäß den Figuren 1 und 4 bis 6 sowie 10 und 11 innerhalb eines die nebeneinander angeordneten Segmente 4 an dem Balken 2 haltenden Trägers 11, im Ausführungsbeispiel in einer Innenhöhlung 12 dieses Trägers 11 angeordnet, welche Innenhöhlung 12 sich über die Länge des Trägers 11 erstreckt.

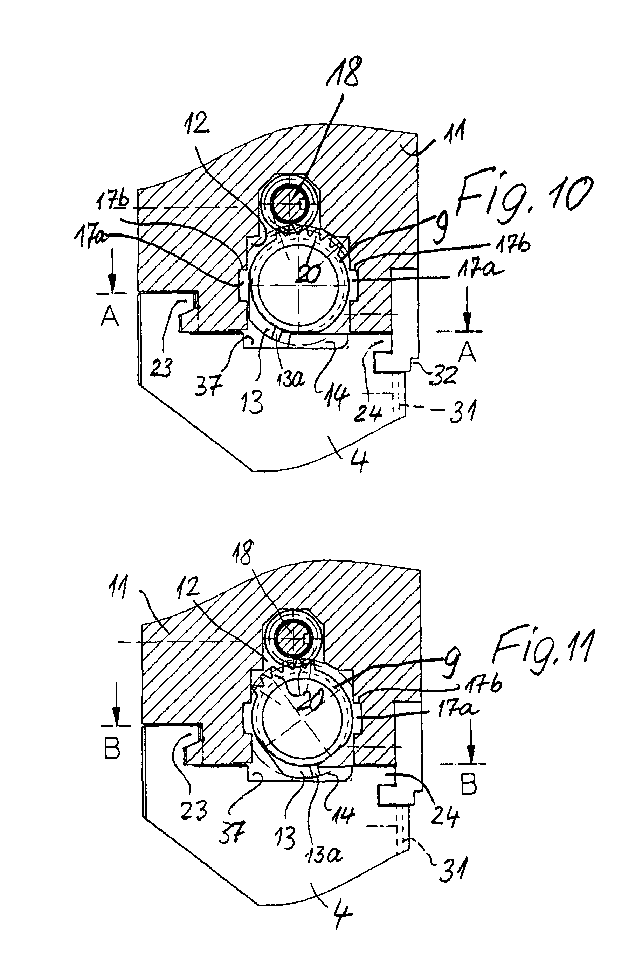

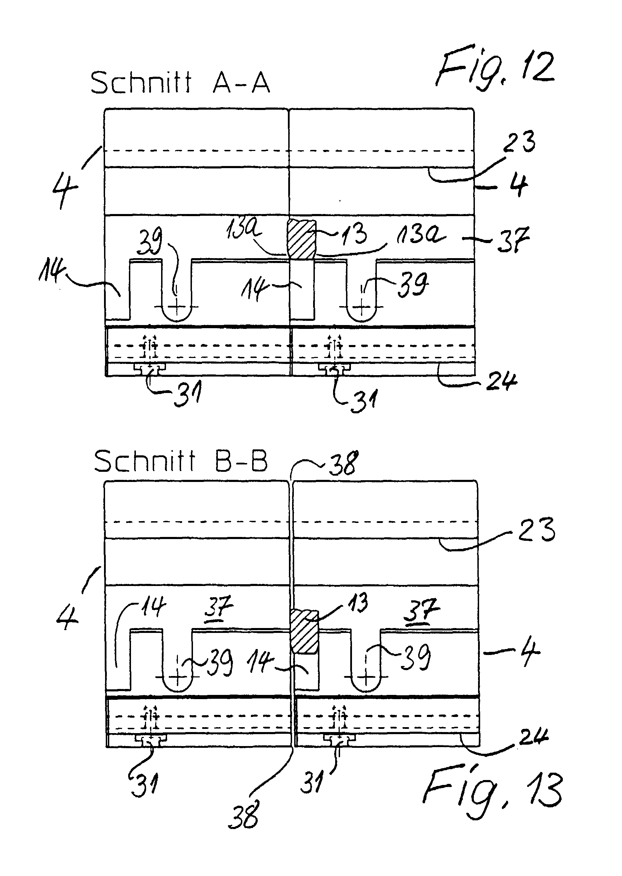

Vor allem in den Figuren 10 bis 14 erkennt man, daß dabei das Kupplungsstück 9 einen gegenüber seinem Umfang oder seiner Außenkontur bereichsweise vorstehenden Kupplungsmitnehmer 13 hat, der in Kupplungsstellung gemäß Fig.11, 13 und 14 gegenüber dem ihm benachbarten Bereich des Umrisses des Trägers 11 - im Ausführungsbeispiel nach unten - vorsteht und in die Gegenkupplung eines Segmentes 4 eingreift.

Es sei an dieser Stelle erwähnt, daß die Gegenkupplung im Ausführungsbeispiel eine Aussparung 14 ist, was eine besonders einfach herstellbare und zu handhabende Form einer solchen Gegenkupplung darstellt. Das Kupplungsstück 9 kann aus dieser Kupplungsposition relativ zu dem Verstellantrieb 6 und den als Aussparungen 14 ausgebildeten Gegenkupplungen der Segmente 4 ausgekuppelt werden, wobei eine solche ausgekuppelte Position in den Figuren 4 bis 6 und 10 und 12 dargestellt ist.

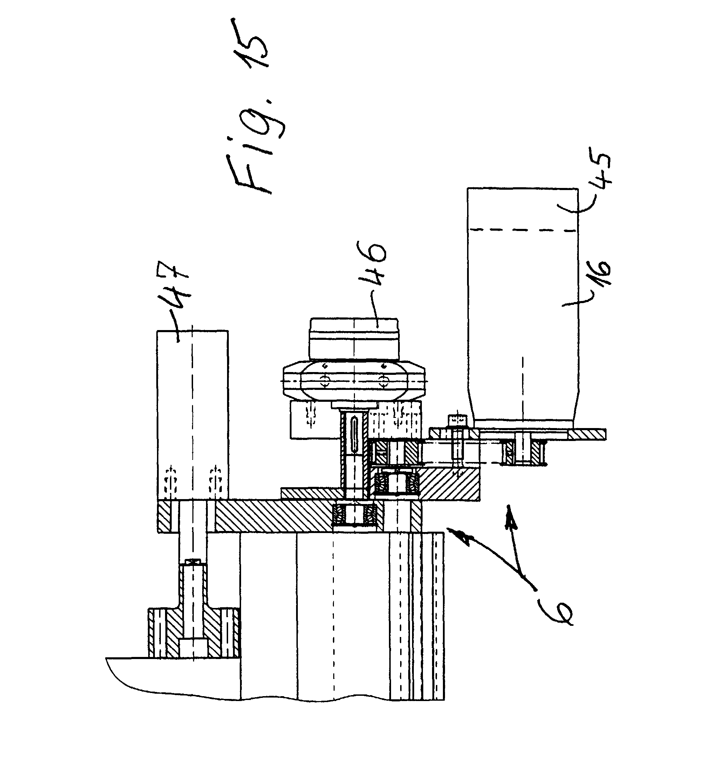

Damit der Kupplungsmitnehmer 13 wahlweise in eine Aussparung 14 eingeschwenkt oder wieder zurückgeschwenkt werden kann, ist das Kupplungsstück 9 an dem Verstellantrieb 6 um eine parallel zu dem Verstellantrieb 6 oder in Orientierungsrichtung dieses Verstellantriebes gerichtete Achse drehbar gelagert. Das Drehlager 15 des Kupplungsstückes 9 ist in Fig.14 in einem Schnitt durch dieses Kupplungsstück 9 und sein Drehlager 15 erkennbar.

Der Verstellantrieb 6 ist ein Linearantrieb, der an einer Seite über die Reihe der Segmente 4 übersteht und in diesem überstehenden Bereich einen Antriebsmotor 16 hat. Der den Verstellantrieb 6 bildende Linearantrieb ist dabei im Ausführungsbeispiel ein Spindeltrieb mit der schon erwähnten drehbaren Spindel 10 und einer das Kupplungsstück 9 tragenden, wiederum in Fig.14 deutlich erkennbaren Mutter 17, die durch zwei seitliche Leisten 17a, welche in Nuten 17b in der Innenlängshöhlung 12 des Trägers 11 axial verschieblich eingreifen, gegen eine Drehung gesichert oder gesperrt ist, so daß eine Verdrehung der Spindel 10 zu einer Axialverstellung dieser Mutter 17 und damit des von dieser getragenen Kupplungsstückes 9 führt. Mit Hilfe des Antriebsmotors 16 kann also die ortsfeste Spindel verdreht werden, so daß das Kupplungsstück 9 mittels der Mutter 17 in Axialrichtung der Spindel lo verstellbar ist. Dabei wird in Fig.14 deutlich, daß das Drehlager 15 an einer Stirnseite der Mutter 17 angeordnet ist, so daß sich das Kupplungsstück 9 von dem Antriebsmotor 16 aus gesehen vor der Mutter 17 befindet und dadurch auch möglichst weit abliegende Segmente 4 erfassen kann.

Parallel zu dem Linearantrieb, also zu der Spindel 10 verläuft ein noch näher zu beschreibendes Verstellelement, mit welchem das Kupplungsstück 9 seinerseits auf seinem Lager 15 verdreht werden kann, um seinen Kupplungsmitnehmer 13 in Kupplungseingriff und außer Kupplungseingriff zu verschwenken. Im Ausführungsbeispiel ist als Verstellelement eine parallel zu der die Mutter 17 mit dem relativ zu ihr drehbaren Kupplungsstück 9 tragenden und in Richtung der Reihe der Segmente 4 verstellenden Spindel 10 verlaufende gezahnte Welle 18 vorgesehen, wobei diese parallele Welle 18 oberhalb der Spindel 10 gelagert ist. Die Zähne 19 dieser gezahnten Welle 18 verlaufen in Axialrichtung und kämmen mit einer an dem Kupplungsstück 9 außenseitig angeordneten Gegenzahnung, die dabei die Form eines Zahnradsegmentes 20 hat. Man erkennt dies einerseits in den Figuren 4 bis 6 und andererseits besonders gut in den Figuren 10 und 11, in denen die beiden Drehstellungen des Kupplungsstückes 9 und seines Kupplungsmitnehmers 13 dargestellt sind. Dadurch wird auch deutlich, daß ein Zahnsegment 20 mit in diesem Falle sechs Zähnen ausreicht, um den Kupplungsmitnehmer 13 aus der einen in die andere Endposition zu verschwenken. Die in ihrem Durchmesser wesentlich kleinere gezahnte Welle 18 kann dazu aufgrund des Übersetzungsverhältnisses eine Umdrehung durchführen.

Dadurch, daß die gezahnte Welle 18 oberhalb der Spindel 10 innerhalb des Trägers 11 für die Segmente 4 in der entsprechend geformten Innenlängshöhlung 12 angeordnet und gelagert ist, ergibt sich eine platzsparende und vor allem auch geschützte Anordnung all dieser Antriebs- und Getriebeteile. Gleichzeitig wird erreicht, daß das für eine Gruppe von Segmenten 4 einzige Kupplungsstück 9 direkt mit dem jeweiligen Segment 4 im Bereich von dessen Halterung an dem Träger 11 gekuppelt werden kann, so daß es eine möglichst direkte Kraftübertragung bei einer Verschiebebewegung gibt.

Dabei sind die Segmente 4 jeweils einzeln lösbar an dem Träger 11 gehalten, das heißt sie können nicht nur verschoben, sondern auch zur Bildung mehr oder weniger großer Lücken 8 entfernt und/oder durch Segmente 4 anderer Abmessungen ersetzt werden. Diese lösbare Halterung der Segmente 4 läßt sich am besten anhand der Figuren 4 bis 9 erkennen und erläutern:

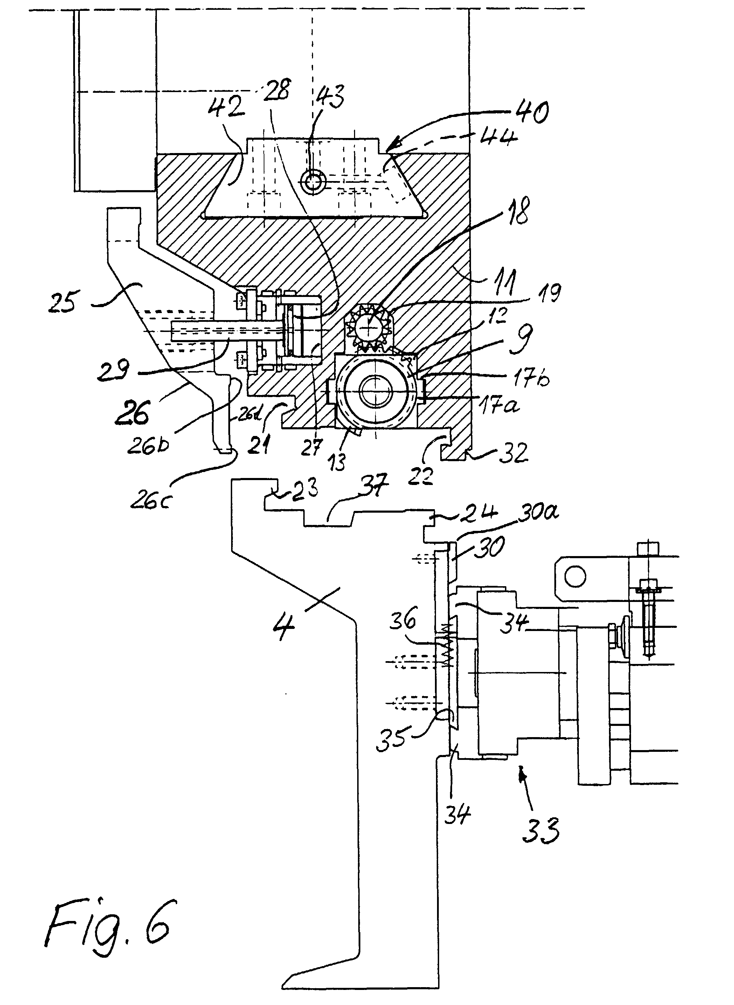

Der Träger 11 hat zwei im Ausführungsbeispiel in ihrer Höhe gegeneinander versetzte, nach derselben Seite, nämlich der Rückseite hin offene Nuten 21 und 22 (siehe insbes. Fig. 6), die man gegenüber einer Vertikalen auch als Hinterschneidungen bezeichnen kann. Die beiden Nuten 21 und 22 sind in horizontaler Richtung gesehen voneinander beabstandet und verlaufen in Erstreckungsrichtung des Trägers 11 parallel zueinander. In diesen Nuten 21 und 22 passen an den Segmenten 4 jeweils angeordnete Vorsprünge 23 und 24, die in ihrem Abstand, ihrer Größe und ihrem Höhenversatz den entsprechenden Abmessungen der Nuten 21 und 22 entsprechen und zwischen welchen die die Aussparung 14 als Gegenkupplung aufweisende Stirnseite des jeweiligen Segmentes 4 verläuft. Befinden sich beide Vorsprünge 23 und 24 gemäß Fig.4 oder 10 und 11 in ihrem Eingriff in den Nuten 21 und 22, hat auch das Kupplunngsstück 9 und sein Kupplungsmitnehmer 13 die richtige Position gegenüber der als Aussparung 14 ausgebildeten Gegenkupplung.

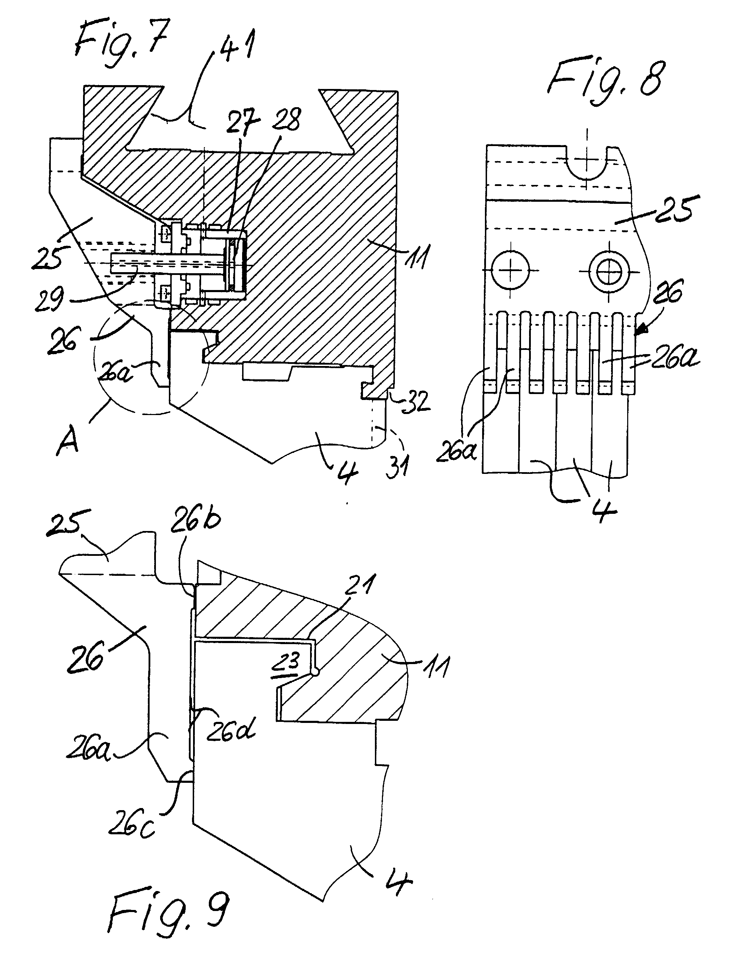

Um die Segmente 4 in ihrer jeweiligen Position zu fixieren, trägt der Träger 11 im Ausführungsbeispiel jeweils eine Klemmleiste 25, die einen die Segmente 4 in ihrem Haltebereich und insbesondere im Bereich des in die Nut 21 eingreifenden Vorsprunges 23 von oben her übergreifenden Haltesteg 26 hat, womit die Segmente 4 in ihrer Eingriffsstellung an dem Träger 11 festlegbar sind. Man erkennt deutlich vor allem beim gleichzeitigen Betrachten der Figuren 4 bis 6 und insbesondere auch anhand der Figuren 7 bis 9, daß die Klemmleiste 25 in der Richtung wirksam ist, die in die Nuten 21 und 22 weist, so daß also bei gemäß Fig.4 und 7 angedrücktem Haltesteg 26 ein Herausführen der Vorsprünge 23 und 24 aus ihren Nuten 21 und 22 nicht möglich ist.

Somit ist einerseits eine wirkungsvolle Halterung gegeben, die andererseits aber auch sehr einfach geöffnet werden kann und die in gelockertem Zustand auch die Verschiebung der Segmente 4 erlaubt, ohne daß diese aus ihrer Halterung herausrutschen könnten.

Die Verstellung der Klemmleiste 25 erfolgt mittels über ihre Länge nebeneinander angeordnete, in dem Träger 11 eingelassene Arbeitszylinder 27 mit relativ zu diesen verstellbaren Kolben 28, deren Kolbenstange 29 mit der Klemmleiste 25 verbunden ist.

Damit auch bei unterschiedlichen Breiten der Segmente 4 alle Segmente 4 jeweils von der Klemmleiste 25 sicher und fest gehalten werden, ist im Ausführungsbeispiel gemäß Fig.8 der Haltesteg 26 kammartig in Einzelstege 26a unterteilt, wobei die Breite und der Abstand der Einzelstege 26a geringer als die in Verschieberichtung orientierte Breite der Segmente 4 - auch des schmalsten Segmentes 4 - ist. In Fig.8 erkennt man deutlich, daß auf diese Weise an einem Segment 4 mindestens ein Einzelsteg 26a angreift, andererseits dieser Angriff aber unabhängig von dem jeweils benachbarten Einzelsteg 26a ist. Da die Einzelstege 26a eine gewisse Elastizität und Federwirkung haben, wird somit jedes Segment 4 von einem oder mehreren Einzelstegen 26 in seine Gebrauchslage gedrückt.

Damit auch eine gute Anlage des Haltesteges 26 und der Klemmleiste 25 im Bereich einer Lücke 8 erreicht wird, wo also ein oder mehrere Segmente 4 fehlen, hat der Haltesteg 26 beziehungsweise haben die Einzelstege 26a gemäß Figur 9 eine Anlage 26b an dem Träger 11 und eine Anlage 26c an dem Segment 4 und dazwischen eine Ausnehmung 26d. Fehlt das Segment 4, hat also der Haltesteg 26 dennoch eine Abstützung über seine Anlage 26b, die aber nicht wirksam ist, wenn der Einzelsteg 26a mit der Anlage 26c gegen ein Segment 4 drückt.

In den Figuren 4 bis 6 ist außerdem dargestellt, daß zusätzlich zu der Klemmleiste 25 an jedem Segment 4 ein Riegel 30 zum Fixieren der Halteposition des Segmentes 4 an dem Träger 11 insbesondere bei geöffneter oder gelockerter Klemmleiste 25 vorgesehen ist, welcher Riegel 30 benachbart zu dem von der Klemmleiste 25 weiter entfernt abliegenden Vorsprung 24 des Segmentes 4 angeordnet ist, der in die an dem Träger 11 tieferliegende Hinterschneidung 22 eingreift, wenn das Segment 4 seine Gebrauchsstellung hat.

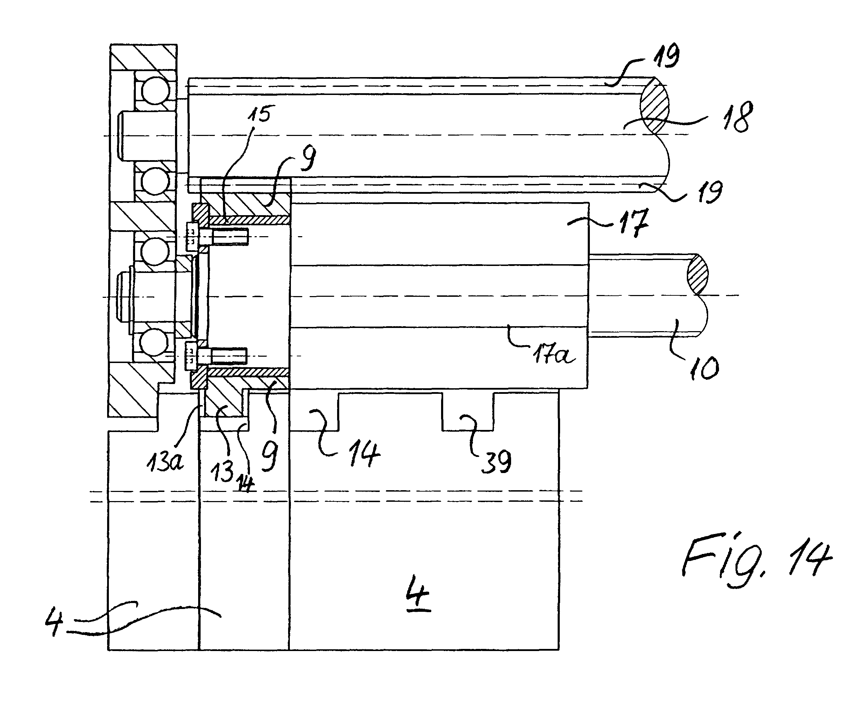

Der Riegel 30 ist an dem Segment 4 in einer in den Figuren 12 und 13 besonders gut erkennbaren Führung 31, die die Form einer T-Nut hat, in vertikaler Richtung verschiebbar gelagert und an dem Träger 11 ist eine in Längsrichtung durchgehende, in diesem Falle etwa stufenförmige Ausnehmung 32 vorgesehen, in die der Riegel 30 gemäß Figur 4 mit seinem Riegelende 30a in Schließstellung eingreift.

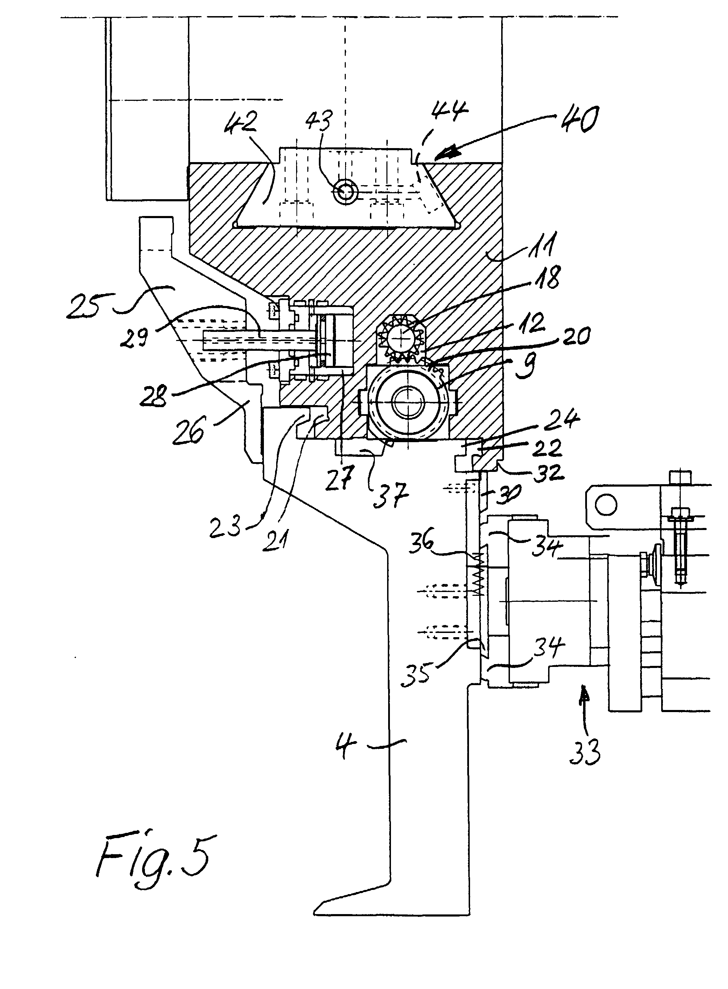

In den Figuren 4 bis 6 ist ein Greifer 33 dargestellt, der für ein maschinelles Öffnen des Riegels 30 geeignet ist und gleichzeitig nach dem Öffnen des Riegels 30 ein Segment 4 erfassen und aus dem gesamten Verbund lösen kann. Der Greifer 33 hat dazu in vertikaler Richtung relativ zueinander verstellbare Greifbacken 34, die einerseits an einer Greifleiste 35 und andererseits an dem Riegel 30 an entsprechenden Vorsprüngen angreifen können, wobei die Verstellbewegung der Greifbacken 34 zunächst zum vertikalen Zurückziehen des Riegels 30 nach unten führt, wodurch das Segment 4 gemäß Figur 5 gleichzeitig so fest ergriffen wird, daß es nach dem Öffnen der Klemmleiste 25 aus seiner Halterung ausgehoben werden kann. Umgekehrt kann so ein solches Segment 4 mit Hilfe des Greifers 33 auch wieder an den Träger 11 gebracht und in die Nuten 21 und 22 eingesetzt werden.

Die Verschiebung des Riegels 30 in seine Schließstellung erfolgt dabei durch eine Rückstellfeder 36. Beim Öffnen wird das Riegelende 30a soweit zurückgezogen, daß es sich unterhalb der Ausnehmung 32 des Trägers 11 befindet so daß die Querbewegung aus den Nuten 21 und 22 heraus nicht behindert wird.

Jedes Segment 4, das auswechselbar und verschiebbar vorgesehen ist, hat an seiner in Gebrauchsstellung oberen, in den Figuren 12 und 13 sichtbaren Stirnseite zwischen den mit den Hinterschneidungen oder Nuten 21 und 22 des Trägers 11 zusammenwirkenden Vorsprüngen 23 und 24 zumindest eine Aussparung 14, die wie vorstehend bereits erwähnt als Gegenkupplung für den Kupplungsvorsprung oder den Kupplungsmitnehmer 13 des Kupplungsstückes 9 dient. Die in Verschieberichtung orientierte Breite der Aussparung 14 entspricht dabei fast der dieses Kupplungsmitnehmers 13.

Dabei erkennt man in den Figuren 12 und 13 und außerdem auch in Figur 14, daß diese als Gegenkupplung dienende Aussparung 14 an einem Segment 4 nach einer Seite in einer Verschieberichtung offen ist, also etwa die Form einer negativen Stufe hat. Die Aussparung 14 wird dann durch das Nachbarsegment begrenzt, so daß sie am Rand eines Segmentes 4 begrenzt durch das Nachbarsegment 4 insgesamt in den Figur 14 erkennbaren nutenförmigen Querschnitt hat. Eine solche Aussparung ist besonders einfach herstellbar.

Dabei ist in Figur 13 und 14 angedeutet, daß der Kupplungsmitnehmer 13 im Ausführungsbeispiel eine etwas größere Breite als diese einseitig offene Aussparung 14 hat und daß an dem Kupplungsmitnehmer 13 eine beidseitige Einlaufschräge 13a vorgesehen ist, die in die Aussparung 14 eingreifen kann. Dies hat zur Folge, daß beim Einschwenken des Kupplungsmitnehmers 13 in die Aussparung 14 das Segment 4 von dem Nachbarsegment etwas getrennt wird und zwischen den beiden Segmenten die in Figur 13 erkennbare Fuge 38 entsteht. Dadurch wird erreicht, daß das Verschieben des einen Segmentes 4 relativ zu dem anderen auch wirklich stattfindet und nicht eventuell das Nachbarsegment bei der Verschiebung an dem erfaßten Segment haften bleibt.

In Figur 12 bis 14 ist außerdem dargestellt, daß an insbesondere breiten Segmenten 4 auch eine, gegebenenfalls mehrere, beidseitig begrenzte Aussparung 39 als Gegenkupplung vorgesehen sein können, bei denen dann der Nutenquerschnitt vollständig in das Material des Segmentes 4 eingearbeitet ist. Die Breite dieser Aussparungen 39 entspricht dabei selbstverständlich der des Kupplungsmitnehmers 13 oder übertrifft diese geringfügig. Somit kann beim Eingriff des Kupplungsmitnehmers 13 in diese Aussparung 39 das entsprechende Segment 4 in beide Richtungen verschoben werden, während beim Eingriff in eine randseitig offene Aussparung 14 die Verschiebung dieses Segmentes nur nach einer Seite möglich ist.

Es wurde schon erwähnt, daß spiegelsymmetrisch zu einem mittleren, in quer- und vertikaler Richtung verstellbaren Schieber 7 beidseits von diesem jeweils eine Reihe von Segmenten 4 mit jeweils einem Verstellantrieb 6 und einer dazugehörenden Spindel 10 sowie jeweils einem relativ zu den Segmenten 4 verstell- und einstellbaren Kupplungsstück 9 vorgesehen ist. Dadurch ist die Vielseitigkeit der entsprechenden Bearbeitungsmaschine entsprechend groß und in Figur 1 sind verschiedene Werkstücke 1 mit umgebogenen Rändern la angedeutet, die in unterschiedlicher Position an den beiden Gruppen von Segmenten 4 ganz oder teilweise angreifen können. Die Vielseitigkeit wird dadurch vergrößert, daß Segmente 4 unterschiedlicher Abmessungen, insbesondere unterschiedlicher Breiten auswechselbar kombiniert sind, wie sich aus dem Vergleich der Figuren 1 und 2 beziehungsweise 3 ergibt. Somit kann vor allem auch eine Anpassung an unterschiedlich große Werkstücke 1 aufgrund der Auswechselbarkeit und Austauschbarkeit der Segmente 4 erfolgen.

Eine weitere Vergrößerung der Vielseitigkeit ergibt sich dadurch, daß der die Segmente 4 lösbar tragende Träger 11 seinerseits in seiner Längserstreckungsrichtung und parallel zur Biegelinie verschiebbar, im Ausführungsbeispiel an einer Schwalbenschwanzführung 40, gelagert und festlegbar, zum Beispiel festklemmbar ist. Die Schwalbenschwanzführung 40 erkennt man besonders gut in den Figuren 4 bis 7, wobei in Figur 7 nur die schwalbenschwanzförmige Nut 41 des Trägers 11 dargestellt ist. Das schwalbenschwanzförmige Gegenstück 42 enthält einen Kanal 43, von welchem aus eine oder mehrere Klemmstücke 44 betätigt werden können, die gegen die Innenseite der Nut 41 verstellbar sind. Vor allem können die Träger 11 von der Mitte aus wegverschoben werden, um dadurch sämtliche an ihnen gehaltenen Segmente 4 beziehungsweise eine spezielle Einstellung und Verschiebeposition dieser Segmente 4 verschieben zu können. Bei aus dem Bereich der Träger 11 verstelltem Mittelschieber 7 können die Träger 11 jedoch auch aufeinanderzu verschoben werden. Zum Verschieben dienen Arbeitszylinder 47.

Der in den Figuren 1 und 15 dargestellte Antriebsmotor 16 für die Spindel 10 zum Verstellen des Kupplungsstückes 9 ist im Ausführungsbeispiel ein Elektromotor, der mit einem Drehgeber 45 gekuppelt ist, so daß es möglich ist, die Verstellung von Segmenten 4 immer wieder zu wiederholen und zu automatisieren und insbesondere über eine entsprechende Programmsteuerung von vorneherein vorzuwählen. Der Drehgeber 45 sorgt in an sich bekannter Weise dafür, daß die Spindel 10 die erforderliche Zahl von Umdrehungen und Winkelverdrehungen durchführt, um die Mutter 17 und damit das Kupplungsstück 9 in die jeweils gewünschte Kupplungsposition in Relation zu einem ausgewählten Segment 4 zu bringen.

Der benachbart zu dem Antriebsmotor 16 angeordnete Schwenkantrieb 46 für die gezahnte Welle 18, der zum Verschwenken des Kupplungsmitnehmers 13 in oder außer Eingriff dient, ist gegenüber dem Antriebsmotor 16 für die Spindel 10 elektrisch derart gesperrt, daß er nur bei stehendem Spindelantrieb betätigbar ist. Dadurch kann verhindert werden, daß während einer Verstellung der Mutter 18 und des Kupplungsstückes 9 der Kupplungsmitnehmer 13 in Kupplungsposition geschwenkt und dadurch beschädigt wird oder seinerseits Bereiche an den Segmenten 4 zerstört.

In den Figuren 4 bis 6 ist, wie bereits erwähnt, der Kupplungsmitnehmer 13 außer Eingriff. Dennoch ragt er etwas aus dem Träger 11 nach unten in den Bereich der Stirnseite der Segmente 4 vor. Damit dennoch die Axialverstellung problemlos möglich ist, ist an der Stirnseite der Segmente 4 gemäß Figur 4 bis 7 und insbesondere gemäß Figur 13 und 14 eine in Erstreckungsrichtung der Spindel 10 durchgehende Nut 37 vorgesehen, von welcher die Aussparungen 14 und 39 gemäß Figur 12 und 13 jeweils abgehen.

Bei einer solchen Bearbeitungsmaschine können auf diese Weise an einem Werkstück 1 dessen Ränder 1a so gebogen werden, daß sie sogar Hinterschneidungen bilden, trotzdem aber die Trennung dieses so bearbeiteten Werkstückes 1 von dem Niederhalter 1 möglich bleibt. Um dabei nahezu beliebige Segmente 4 des Niederhalters 3 für eine Verschiebung auswählen zu können, während andere Segmente 4 nicht verschoben werden sollen, ist für eine solche Gruppe von Segmenten 4 jeweils ein einziges Kupplungsstück 9 in Richtung der Biegelinie stufenlos verstellbar und hat einen Kupplungsmitnehmer 13 zum Eingriff in eine entsprechende Gegenkupplung, bevorzugt eine Aussparung 14 und/oder 39 an dem jeweiligen Segment 4, so daß die Ausbildung der Segmente 4 von der Herstellung und der Konstruktion her sehr einfach ist und an den Segmenten 4 keine besonderen Vorkehrungen für ihre Kupplung zum Durchführen einer Verschiebebewegung erforderlich sind.

## Patentansprüche

1. Bearbeitungsmaschine für plattenförmige Werkstücke (1), insbesondere zur Erzeugung von gebogenen Rändern (1a) an Blechteilen und/oder zum Beschneiden oder Stanzen von aus Blech gebildeten Werkstücken, mit einer horizontalen, insbesondere leistenförmigen Werkstückauflage (5) und mit einem Bearbeitungswerkzeug sowie mit einem nahe dem Bearbeitungswerkzeug angeordneten, in einzelne Segmente (4) unterteilten Niederhalter (3) zum Festspannen des Werkstückes (1) auf der Werkstückauflage, wobei die Segmente (4) in einer Reihe nebeneinander in Richtung der Orientierung der Werkstückauflage (5) und einer Bearbeitungslinie, insbesondere der Biegelinie, angeordnet, in dieser Richtung verschiebbar und festlegbar gelagert und mit einem im wesentlichen über die Länge des Niederhalters (3) reichenden Verstellantrieb (6) wahlweise lösbar kuppelbar sind, wobei an dem Verstellantrieb (6) ein Kupplungsstück (9) in Richtung der von den Segmenten (4) gebildeten Reihe stufenlos verstellbar oder verfahrbar ist, welches in jeder beliebigen Position des Segmentes (4) mit diesem kuppelbar ist und einen gegenüber seinem Umfang bereichsweise vorstehenden Kupplungsmitnehmer (13) hat und wobei jedes Segment (4) eine Gegenkupplung zum lösbaren Verbinden mit dem Kupplungsmitnehmer (13) des verstellbaren Kupplungsstückes (9) hat, **dadurch gekennzeichnet**, daß der das Kupplungsstück (9) tragende Teil des Verstellantriebes (6) innerhalb eines die nebeneinander angeordneten Segmente (4) haltenden Trägers (11) in einer Innenhöhlung (12) dieses Trägers angeordnet ist, und daß der Kupplungsmitnehmer (13) in Kupplungsstellung gegenüber dem ihm benachbarten Bereich des Umrisses des Trägers (11) vorsteht.

2. Bearbeitungsmaschine nach Anspruch 1, dadurch gekennzeichnet, daß der Verstellantrieb (6) ein Linearantrieb ist und daß das Kupplungsstück (9) an dem Verstellantrieb (6) um eine parallel zu dem Verstellantrieb (6) oder in OrientierungsrichtungdesVerstellantriebesgerichteteAchse drehbar und dadurch der Kupplungsmitnehmer um diese Achse in Kupplungsposition und aus der Kupplungsposition verschwenkbar ist.

3. Bearbeitungsmaschine nach Anspruch **2**, dadurch gekennzeichnet, daß der den Verstellantrieb (6) bildende Linearantrieb zumindest an einer Seite über die Reihe der Segmente (4) übersteht und in diesem überstehenden Bereich einen Antriebsmotor (16) hat.

4. Bearbeitungsmaschine **nach einem der Ansprüche 1 bis 3,** dadurch gekennzeichnet, daß als Linearantrieb ein Spindeltrieb mit drehbarer Spindel (10) und dadurch axial auf der Spindel (10) verstellbarer Mutter (17) vorgesehen ist und daß das Kupplungsstück (9) auf der Mutter (17) dieses Spindeltriebes gelagert und durch Drehung der ortsfesten Spindel (10) mittels der gegen Drehen gesicherten Mutter (17) in Axialrichtung der Spindel (10) verstellbar ist.

5. Bearbeitungsmaschine nach einem der Ansprüche 1 bis 4, dadurch gekennzeichnet, daß parallel zu dem Linearantrieb oder der Spindel (10) ein Verstellelement zum Verdrehen des Kupplungsstückes (9) in Kupplungseingriff und außer Kupplungseingriff verläuft.

6. Bearbeitungsmaschine nach einem der Ansprüche 1 bis 5, dadurch gekennzeichnet, daß parallel zu **dem das Kupplungsstück (9) tragenden Teil eine gezahnte Welle (18) verläuft,** deren in Axialrichtung verlaufende Zähne (19) mit einer an dem Kupplungsstück (9) angeordneten Gegenzahnung oder einem Zahnsegment (20) kämmt.

7. Bearbeitungsmaschine nach Anspruch 6, dadurch gekennzeichnet, daß die gezahnte Welle (18) parallel zu der die Mutter (17) mit dem relativ zu ihr drehbaren Kupplungsstück (9) tragenden und in Richtung der Reihe der Segmente (4) verstellenden Spindel (10) verläuft.

8. Bearbeitungsmaschine nach einem der Ansprüche 1 bis 7, dadurch gekennzeichnet, daß die gezahnte Welle (18) oberhalb der Spindel (10) innerhalb des Trägers (11) für die Segmente (4) in einer Innenlängshöhlung (12) angeordnet und gelagert ist.

9. Bearbeitungsmaschine nach einem der Ansprüche 1 bis 8, dadurch gekennzeichnet, daß der Träger (11) zwei gegeneinander versetzte, nach derselben Seite hin offene Nuten (21, 22) oder Hinterschneidungen hat, die in horizontaler Richtung beabstandet sind und in die an dem jeweiligen Segment (4) angeordnete Vorsprünge passen, zwischen welchen die die Gegenkupplung aufweisende Stirnseite verläuft.

10. Bearbeitungsmaschine nach einem der Ansprüche 1 bis 9, dadurch gekennzeichnet, daß der Träger (11) wenigstens eine oder mehrere einander fortsetzende Klemmleisten (25) trägt, die einen die Segmente (4) in ihrem Haltebereich übergreifenden Haltesteg (26) hat oder haben, womit die Segmente (4) in ihrer Eingriffsstellung an dem Träger (11) festlegbar sind.

11. Bearbeitungsmaschine nach einem der Ansprüche 1 bis 10, dadurch gekennzeichnet, daß die Klemmleiste (25) mittels über ihre Länge nebeneinander angeordnete, insbesondere in dem Träger (11) eingelassene Arbeitszylinder (27) in Offen- und Schließstellung verstellbar ist.

12. Bearbeitungsmaschine nach einem der Ansprüche 1 bis 11, dadurch gekennzeichnet, daß der Haltesteg (26) der Klemmleiste (25) kammartig in Einzelstege (26a) unterteilt ist und daß die Breite und der Abstand der Einzelstege (26a) geringer als die in Verschieberichtung orientierte Breite der Segmente (4), auch des schmalsten Segmentes (4) ist.

13. Bearbeitungsmaschine nach einem der Ansprüche 1 bis 12, dadurch gekennzeichnet, daß der Haltesteg (26) oder seine Einzelstege (26a) eine Anlage (26b) an dem Träger (11) und eine Anlage (26c) an dem jeweiligen Segment (4) hat.

14. Bearbeitungsmaschine nach einem der Ansprüche 1 bis 13, dadurch gekennzeichnet, daß zusätzlich zu der Klemmleiste (25) oder anstelle der Klemmleiste (25) an jedem Segment (4) ein Riegel (30) zum Fixieren seiner Halteposition an dem Träger (11) vorgesehen ist, welcher Riegel (30) benachbart zu dem von der Klemmleiste (25) abliegenden Vorsprung (24) an dem Segment (4) angeordnet ist, welcher in die an dem Träger (11) tieferliegende Hinterschneidung oder Nut (22) eingreift.

15. Bearbeitungsmaschine nach einem der Ansprüche 1 bis 14, dadurch gekennzeichnet, daß an dem Träger (11) eine in Längsrichtung durchgehende Ausnehmung (32) vorgesehen ist, in die der Riegel (30) in Schließstellung eingreift.

16. Bearbeitungsmaschine nach einem der Ansprüche 1 bis 15, dadurch gekennzeichnet, daß jedes Segment (4) an seiner in Gebrauchsstellung oberen Stirnseite zwischen den mit den Hinterschneidungen oder Nuten (21, 22) des Trägers (11) zusammenwirkenden Vorsprüngen (23, 24) mindestens eine Aussparung (14) als Gegenkupplung für den Kupplungsvorsprung oder Kupplungsmitnehmer (13) des Kupplungsstückes (9) hat, dessen Breite in Verschieberichtung etwa der dieses Kupplungsmitnehmers (13) entspricht.

17. Bearbeitungsmaschine nach einem der Ansprüche 1 bis 16, dadurch gekennzeichnet, daß die als Gegenkupplung dienende Aussparung (14) an einem Segment (4) nach einer Seite in einer Verschieberichtung offen ist und durch das Nachbarsegment begrenzt wird.

18. Bearbeitungsmaschine nach einem der Ansprüche 1 bis 17, dadurch gekennzeichnet, daß der Kupplungsmitnehmer (13) eine größere Breite als die einseitig offene Aussparung (14) hat und an ihm und/oder der Aussparung (14) eine Einlaufschräge (13a) vorgesehen ist.

19. Bearbeitungsmaschine nach einem der Ansprüche 1 bis 18, dadurch gekennzeichnet, daß an Segmenten (4) wenigstens eine beidseitig begrenzte Aussparung (39), gegebenenfalls zusätzlich zu einer einseitig offenen Aussparung (14), als Gegenkupplung vorgesehen ist.

20. Bearbeitungsmaschine nach einem der Ansprüche 1 bis 19, dadurch gekennzeichnet, daß beidseits von einem mittleren, in Quer- und vertikaler Richtung verstellbaren Schieber (7) jeweils wenigstens eine Reihe oder Gruppe von Segmenten (4) mit jeweils einem relativ zu diesen verstellbaren Kupplungsstück (9) vorgesehen ist.

21. Bearbeitungsmaschine nach einem der Ansprüche 1 bis 20, dadurch gekennzeichnet, daß der die Segmente (4) lösbar tragende Träger (11) seinerseits in seiner Längserstreckungsrichtung und parallel zur Biegelinie verschiebbar gelagert und festlegbar, zum Beispiel festklemmbar ist.

22. Bearbeitungsmaschine nach Anspruch 21, dadurch gekennzeichnet, daß der Träger (11) an einer Schwalbenschwanzführung (40) gelagert und festlegbar ist.

## Claims

1. Machining centre for processing flat workpieces (1), particularly for producing curved edges (1a) on sheet metal components and/or for cutting or stamping workpieces formed from sheet metal, with a horizontal, particularly strip-shaped workpiece support (5) and with a machining tool and with a device for holding down (3), mounted near the machining tool, subdivided into individual segments (4), for clamping the workpiece (1) on the workpiece support, wherein the segments (4) are arranged side by side in a row in the direction of orientation of the workpiece support (5) and of a processing line, particularly the bending line, are mounted to be movable in this direction and adapted to be fixed in place and are capable of being selectively releasably coupled to an adjusting drive (6) extending substantially over the length of the device for holding down (3), whilst on the adjusting drive (6) a coupling member (9) is smoothly displaceable or movable in the direction of the row formed by the segments (4), said coupling member (9) being adapted to be coupled to the segment (4) in any desired position of the latter and having a coupling follower (13) projecting relative to its periphery in some areas, each segment (4) having a counter-coupling for releasable connection to the coupling follower (13) of the adjustable coupling member (9), **characterised in that** the part of the adjusting drive (6) carrying the coupling member (9) is arranged inside a carrier (11) holding the segments (4) arranged side by side, in an inner recess (12) of this carrier, and in that in the coupling position the coupling follower (13) projects relative to the part of the circumference of the carrier (11) adjacent thereto.

2. Machining station according to claim 1,
characterised in that the adjusting drive (6) is a linear drive and in that the coupling member (9) is rotatable on the adjusting drive (6) about an axis directed parallel to the adjusting drive (6) or in the direction of orientation of the adjusting drive and in this way the coupling follower is pivotable about this axis into and out of the coupling position.

3. Machining station according to claim 2,
characterised in that the linear drive forming the adjusting drive (6) projects over the row of segments (4) at least on one side and has a drive motor (16) in this projecting zone.

4. Machining station according to one of claims 1 to 3, characterised in that a spindle drive with a rotatable spindle (10) and a nut (17) which is thereby axially movable on the spindle 10 is provided as the linear drive and that the coupling member (9) is mounted on the nut (17) of this spindle drive and is adjustable in the axial direction of the spindle (10) by rotating the fixed spindle (10) by means of the nut (17) which is secured against rotation.

5. Machining station according to one of claims 1 to 4, characterised in that an adjusting element for rotating the coupling member (9) into and out of coupling engagement extends parallel to the linear drive or the spindle (10).

6. Machining station according to one of claims 1 to 5, characterised in that a toothed shaft (18) extends parallel to the part carrying the coupling member (9), the axially extending teeth (19) of which mesh with mating teeth or a toothed segment (20) provided on the coupling member (9).

7. Machining station according to claim 6,
characterised in that the toothed shaft (18) extends parallel to the spindle (10) which carries the nut (17) with the coupling member (9) rotatable relative thereto and which moves it in the direction of the row of segments (4).

8. Machining station according to one of claims 1 to 7, characterised in that the toothed shaft (18) is arranged and mounted above the spindle (10) within the carrier (11) for the segments (4) in an internal oblong recess (12).

9. Machining station according to one of claims 1 to 8, characterised in that the carrier (11) has two grooves (21, 22) or undercuts offset relative to one another and open on the same side, which are spaced apart in the horizontal direction and into which fit projections arranged on the particular segment (4), between which the end face provided with the counter-coupling extends.

10. Machining station according to one of claims 1 to 9, characterised in that the carrier (11) has at least one or more clamping strips (25) forming a continuation of one another, which has or have a retaining bar (26) engaging over the segments (4) in their retaining area, by means of which the segments (4) can be secured in their position of engagement on the carrier (11).

11. Machining station according to one of claims 1 to 10, characterised in that the clamping strip (25) is movable into the open and closed positions by means of working cylinders (27) arranged side by side over its length and particularly embedded in the carrier (11).

12. Machining station according to one of claims 1 to 11, characterised in that the retaining bar (26) of the clamping strip (25) is subdivided into individual bars (26a) like a comb and in that the width and spacing of the individual strips (26a) is less than the width of the segments (4) oriented in the direction of movement, even for the smallest segment (4).

13. Machining station according to one of claims 1 to 12, characterised in that the retaining bar (26) or its individual bars (26a) has an area of abutment (26b) on the carrier (11) and an area of abutment (26c) on the relevant segment (4).

14. Machining station according to one of claims 1 to 13, characterised in that in addition to the clamping strip (25) or instead of the clamping strip (25), on each segment (4) is provided a bar (30) for fixing its retaining position on the carrier (11), the bar (30) being disposed adjacent to the projection (24) remote from the clamping strip (25) on the segment (4) which engages in the undercut or groove (22) lower down on the carrier (11).

15. Machining station according to one of claims 1 to 14, characterised in that on the carrier (11) is provided a continuous longitudinal recess (32) in which the bar (30) engages in the closed position.

16. Machining station according to one of claims 1 to 15, characterised in that each segment (4) has, on its end face which is uppermost in the position of use, between the projections (23, 24) interacting with the undercuts or grooves (21, 22) in the carrier (11), at least one recess (14) as a counter-coupling for the coupling projection or coupling follower (13) of the coupling member (9), the width of which corresponds substantially to that of this coupling follower (13) in the direction of movement.

17. Machining station according to one of claims 1 to 16, characterised in that the recess (14) on a segment (4) acting as a counter-coupling is open on one side in one direction of movement and is bounded by the neighbouring segment.

18. Machining station according to one of claims 1 to 17, characterised in that the coupling follower (13) is wider than the recess (14) open on one side and an approach gradient (13a) is provided on it and/or on the recess (14).

19. Machining station according to one of claims 1 to 18, characterised in that at least one recess (39) bounded on both sides is provided as a counter-coupling on segments (4), optionally in addition to a recess (14) open on one side.

20. Machining station according to one of claims 1 to 19, characterised in that on both sides of a central slide (7) which is movable in the transverse and vertical directions there is provided at least one row or group of segments (4) each having a coupling member (9) which is movable relative thereto.

21. Machining station according to one of claims 1 to 20, characterised in that the carrier (11) which releasably carries the segments (4) is in turn mounted so as to be movable in its longitudinal direction and parallel to the bending line and is adapted to be fixed in place, for example by clamping.

22. Machining station according to claim 21,
characterised in that the carrier (11) is mounted and adapted to be fixed on a dovetail guide.

## Revendications

1. Machine à usiner pour pièces (1) en forme de plaques, notamment pour produire des bords coudés (1a) sur des parties en tôle, et/ou pour découper ou poinçonner des pièces consistant en de la tôle, comprenant un porte-pièces (5) horizontal, notamment en forme de barrette, et un outil d'usinage, ainsi qu'un serre-flan (3) disposé à proximité de l'outil d'usinage et scindé en des segments individuels (4), en vue d'abloquer la pièce (1) sur le porte-pièces, les segments (4) étant juxtaposés en une rangée, dans la direction de l'orientation du porte-pièces (5) et d'une ligne d'usinage, en particulier de la ligne de cintrage, étant montés coulissants et arrêtables dans cette direction, et pouvant être sélectivement accouplés, de manière libérable, à un entraînement de réglage (6) s'étendant pour l'essentiel sur la longueur du serre-flan (3) ; un organe d'accouplement (9) étant réglable ou déplaçable en continu sur l'entraînement de réglage (6), dans la direction de la rangée formée par les segments (4), lequel organe peut être accouplé au segment (4) dans n'importe quelle position de ce dernier, et comportant un taquet d'accouplement (13) faisant saillie par zones vis-à-vis de son pourtour ; et chaque segment (4) présentant un accouplement complémentaire, en vue de la liaison libérable avec le taquet d'accouplement (13) de l'organe d'accouplement (9) réglable, caractérisée par le fait que la partie de l'entraînement de réglage (6), qui porte l'organe d'accouplement (9), est logée à l'intérieur d'un support (11) retenant les segments (4) juxtaposés, dans une cavité intérieure (12) de ce support ; et par le fait que le taquet d'accouplement (13) fait saillie, en position d'accouplement, par rapport à la région du contour du support (11) qui est voisine dudit taquet.

2. Machine à usiner selon la revendication 1, caractérisée par le fait que l'entraînement de réglage (6) est un entraînement linéaire ; et par le fait que l'organe d'accouplement (9) peut tourner, sur l'entraînement de réglage (6), autour d'un axe orienté parallèlement à l'entraînement de réglage (6), ou dans la direction d'orientation dudit entraînement de réglage, de sorte que le taquet d'accouplement peut pivoter, autour de cet axe, pour parvenir à la position l'accouplement et pour quitter la position d'accouplement.

3. Machine à usiner selon la revendication 2, caractérisée par le fait que l'entraînement linéaire formant l'entraînement de réglage (6) fait saillie, au moins d'un côté, au-delà de la rangée des segments (4) et présente un moteur d'entraînement (16) dans cette région saillante.

4. Machine à usiner selon l'une des revendications 1 à 3, caractérisée par le fait qu'il est prévu, en tant qu'entraînement linéaire, un entraînement par broche comprenant une broche rotative (10) et un écrou (17) pouvant, de ce fait, se déplacer axialement sur ladite broche (10) ; et par le fait que l'organe d'accouplement (9) est monté sur l'écrou (17) de cet entraînement par broche et est mobile dans la direction axiale de la broche (10), par rotation de ladite broche (10) fixe, au moyen de l'écrou (17) dont la rotation est interdite.

5. Machine à usiner selon l'une des revendications 1 à 4, caractérisée par le fait qu'un élément de réglage, destiné à faire tourner l'organe d'accouplement (9) pour le mettre en prise d'accouplement et hors prise d'accouplement, s'étend parallèlement à l'entraînement linéaire ou à la broche (10).

6. Machine à usiner selon l'une des revendications 1 à 5, caractérisée par le fait qu'un arbre denté (18) s'étend parallèlement à la partie portant l'organe d'accouplement (9), les dents (19) dudit arbre, s'étendant dans la direction axiale, engrenant dans une denture complémentaire ou dans un secteur denté (20) situé(e) sur l'organe d'accouplement (9).

7. Machine à usiner selon la revendication 6, caractérisée par le fait que l'arbre denté (18) s'étend parallèlement à la broche (10) qui porte l'écrou (17) avec l'organe d'accouplement (9) pouvant tourner par rapport à ce dernier, et qui déplace ledit écrou dans la direction de la rangée des segments (4).

8. Machine à usiner selon l'une des revendications 1 à 7, caractérisée par le fait que l'arbre denté (18) est disposé et monté au-dessus de la broche (10), dans une cavité longitudinale (12), à l'intérieur du support (11) affecté aux segments (4).

9. Machine à usiner selon l'une des revendications 1 à 8, caractérisée par le fait que le support (11) comporte deux rainures (21, 22) ou contre-dépouilles qui sont décalées l'une de l'autre, sont ouvertes en direction du même côté, sont distantes dans le sens horizontal, et dans lesquelles s'ajustent des protubérances disposées sur le segment (4) respectif, et entre lesquelles s'étend la face frontale munie de l'accouplement complémentaire.

10. Machine à usiner selon l'une des revendications 1 à 9, caractérisée par le fait que le support (11) porte au moins un ou plusieurs listel(s) de coincement (25) se prolongeant mutuellement et présentant une membrure d'arrêt (26) qui coiffe les segments (4) dans leur zone de retenue, et par laquelle lesdits segments (4) peuvent être arrêtés sur ledit support (11) dans leur position de venue en prise.

11. Machine à usiner selon l'une des revendications 1 à 10, caractérisée par le fait que le listel de coincement (25) peut être amené à la position d'ouverture et de fermeture au moyen de vérins (27) agencés en juxtaposition sur la Longueur dudit listel, et notamment intégrés dans le support (11).

12. Machine à usiner selon l'une des revendications 1 à 11, caractérisée par le fait que la membrure d'arrêt (26) du listel de coincement (25) est scindée en des membrures individuelles (26a), à la manière d'un peigne ; et par le fait que la largeur et l'espacement des membrures individuelles (26a) sont plus petits que la largeur des segments (4), orientée dans la direction du coulissement, également du segment (4) le plus étroit.

13. Machine à usiner selon l'une des revendications 1 à 12, caractérisée par le fait que la membrure d'arrêt (26), ou ses membrures individuelles (26a), présente(nt) un appui (26b) sur le support (11) et un appui (26c) sur le segment (4) respectif.

14. Machine à usiner selon l'une des revendications 1 à 13, caractérisée par le fait qu'un verrou (30) est prévu sur chaque segment (4), en plus du listel de coincement (25) ou à la place dudit listel de coincement (25), de manière à arrêter sa position de retenue sur le support (11), lequel verrou (30) est disposé, sur le segment (4), au voisinage de la protubérance (24) qui est placée à l'opposé du listel de coincement (25), et qui pénètre dans la contre-dépouille ou la rainure (22) ménagée en profondeur dans le support (11).

15. Machine à usiner selon l'une des revendications 1 à 14, caractérisée par le fait qu'un évidement (32) s'étendant d'un trait dans la direction longitudinale, et dans lequel le verrou (30) pénètre en position de fermeture, est prévu dans le support (11).

16. Machine à usiner selon l'une des revendications 1 à 15, caractérisée par le fait que chaque segment (4) possède à sa face frontale supérieure en position d'utilisation, entre les protubérances (23, 24) coopérant avec les contre-dépouilles ou rainures (21, 22) du support (11), au moins une échancrure (14) se présentant comme un accouplement complémentaire de la saillie d'accouplement ou du taquet d'accouplement (13) de l'organe d'accouplement (9), et dont la largeur correspond sensiblement à celle de ce taquet d'accouplement (13) dans la direction du coulissement.

17. Machine à usiner selon l'une des revendications 1 à 16, caractérisée par le fait que l'échancrure (14) servant d'accouplement complémentaire est ouverte vers un côté sur un segment (4), dans une direction de coulissement, et est délimitée par le segment voisin.

18. Machine à usiner selon l'une des revendications 1 à 17, caractérisée par le fait que le taquet d'accouplement (13) présente une plus grande largeur que l'échancrure (14) ouverte d'un côté, et un biseau de pénétration (13a) est prévu sur ledit taquet et/ou sur ladite échancrure (14).

19. Machine à usiner selon l'une des revendications 1 à 18, caractérisée par le fait qu'au moins une échancrure (39) à délimitation bilatérale est prévue en tant qu'accouplement complémentaire, sur des segments (4), éventuellement en plus d'une échancrure (14) ouverte d'un côté.

20. Machine à usiner selon l'une des revendications 1 à 19, caractérisée par le fait qu'au moins une rangée ou un groupe de segments (4), présentant à chaque fois un organe d'accouplement (9) mobile par rapport à ces derniers, est respectivement prévu(e) de part et d'autre d'une coulisse centrale (7) mobile dans les directions transversale et verticale.

21. Machine à usiner selon l'une des revendications 1 à 20, caractérisée par le fait que le support (11), portant les segments (4) de manière libérable, est à son tour monté coulissant et arrêtable, par exemple blocable par coincement, dans la direction de son étendue longitudinale et parallèlement à la ligne de cintrage.

22. Machine à usiner selon la revendication 21, caractérisée par le fait que le support (11) est monté et peut être arrêté sur un guide (40) en queue d'aronde.
